(19) Europäisches Patentamt / European Patent Office / Office européen des brevets

(11) **EP 3 889 871 A1**

(12) **DEMANDE DE BREVET EUROPEEN**

(43) Date de publication:
**06.10.2021 Bulletin 2021/40**

(51) Int Cl.:
**G06Q 20/40** (2012.01)  **G06N 3/02** (2006.01)

(21) Numéro de dépôt: **20315097.4**

(22) Date de dépôt: **01.04.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeurs:
• **WORLDLINE**
**95870 Bezons (FR)**
• **Université Libre de Bruxelles**
**1050 Bruxelles (BE)**

(72) Inventeurs:
• **Devaux, Virgile**
**69004 Lyon (FR)**
• **Coter, Guillaume**
**69100 Villeurbanne (FR)**

• **He-Guelton, Liyun**
**69580 Sathonay-village (FR)**
• **Silbini, Wissam**
**69007 Lyon (FR)**
• **Oblé, Frédéric**
**69005 Lyon (FR)**
• **Fabry, Rémy**
**5030 Gembloux (BE)**
• **Lebichot, Bertrand**
**1490 Court-Saint-Etienne (BE)**
• **Bontempi, Gianluca**
**1950 Kraainem (BE)**

(74) Mandataire: **Novagraaf Technologies**
**Bâtiment O2**
**2, rue Sarah Bernhardt**
**CS90017**
**92665 Asnières-sur-Seine Cedex (FR)**

(54) **ENTRAINEMENT DE MODÈLES PRÉDICTIFS POUR LA DÉTECTION AUTOMATIQUE DE FRAUDES À PARTIR D'ENSEMBLES D'APPRENTISSAGE CONSTRUITS DANS DES CONTEXTES DISTINCTS.**

(57) Procédé pour la détection automatique de fraude dans un flux de transactions destinées à un service disponible sur un réseau de télécommunication, comportant un mécanisme d'apprentissage selon lequel des transactions du flux de transactions sont mémorisées dans un premier ensemble de transactions ($E_\tau$), et selon lequel on associe des étiquettes à au moins une partie des transactions dudit premier ensemble, ce mécanisme d'apprentissage comportant en outre
- l'entraînement d'un premier modèle de classification ($M_1$) par transfert de connaissances depuis un second ensemble de transactions ($E_s$), distinct dudit premier ensemble ($E_\tau$), dans lequel lesdites transactions sont associées à des étiquettes ; lesdites étiquettes indiquant si une transaction respective est une transaction normale ou une fraude ; et
- l'entraînement d'un second modèle de classification ($M_2$) basé sur les transactions et étiquettes du premier et du second ensemble ;
et un mécanisme de prédiction, selon lequel on génère une probabilité $P_c$ d'une transaction (140) parmi ledit flux d'être une fraude ou une transaction normale en combinant au moins une première probabilité $P_1$ générée par ledit premier modèle ($M_1$) et une seconde probabilité $P_2$ générée par ledit second modèle ($M_2$).

Fig. 1

**Description**

Domaine de l'invention

La présente invention est relative à la détection automatique de fraudes dans un flux de transactions, notamment financières, destinés à un service disponible sur un réseau de télécommunication. Elle concerne plus particulièrement l'apprentissage des modèles prédictifs utilisés pour cette détection automatique.

Contexte de l'invention

Beaucoup de systèmes de traitement automatique de l'information nécessitent la mise en place d'un mécanisme de détection de fraudes. C'est notamment le cas des services traitant des transactions, notamment financières, et disponibles via les réseaux de télécommunication.

Ces services peuvent être les services de paiements et de transferts de données financières, principalement entre établissements bancaires, à la suite d'une requête d'un utilisateur, par exemple lors d'un achat en ligne ou sur un terminal de paiement de type « PoS » (pour « *Point of Sale* » en anglais) via une carte de paiement.

Ces transactions sont extrêmement nombreuses. Pour cette raison au moins, il est donc nécessaire que les fraudes soient détectées de façon automatique, mais aussi parce que la détection doit intervenir au plus tôt, de façon temps-réel ou quasi temps-réel, afin de déclencher des blocages ou actions correctrices permettent d'éviter ou minimiser l'impact de la fraude pour les utilisateurs (clients et commerçants) et les établissements bancaires.

Il existe de nombreux mécanismes de détection automatique de fraudes. En général, ils se basent sur un modèle prédictif qui permet de généraliser la classification de transactions présentées dans une phase d'apprentissage pour automatiquement déterminer des classes pour des nouvelles transactions. Dans ce type de mécanismes, il importe naturellement que les transactions présentées en apprentissage (formant un « ensemble d'apprentissage ») soient nombreuses et les plus représentatives possibles des transactions subséquentes à traiter.

Or, par nature, un flux de transactions, notamment financières, vers un service disponible sur un réseau de télécommunication, possède des caractéristiques non stationnaires.

En effet, les utilisateurs du service peuvent changer de comportement en fonction de différents paramètres, pas toujours prévisibles. Les habitudes, en termes de comportements d'achat, par exemple, évoluent en fonction des saisons, des modes, des nouvelles tendances, mais aussi du fait du déploiement de nouveaux services ou de nouvelles plateformes technologiques soutenant les transactions. En sus de ces tendances sur les moyens et longs termes, il peut y avoir des changements comportementaux ponctuels qui peuvent être prévisibles (période de Noël, de vacances...) ou non. En outre, les fraudeurs, également, changent leur comportement, notamment dans un but d'augmenter l'efficacité de leurs tentatives de fraude.

Dès lors, on comprend que les modèles prédictifs doivent prendre en compte des données récentes et propres à un contexte afin de réaliser de bonnes prédictions sur les nouvelles transactions analysés. Un dispositif de détection de fraudes basé sur un modèle statique serait donc rapidement obsolète : il ne serait plus à même de détecter les nouveaux comportements des fraudeurs, et ne serait pas non plus à même de considérer efficacement ce qu'est un comportement normal (c'est-à-dire non frauduleux) du fait des évolutions des comportements normaux et du contexte d'utilisation.

La caractérisation d'une fraude peut être substantiellement différentes entre un premier contexte (par exemple du paiement en ligne) et un second contexte (par exemple un paiement sur un point de paiement de type « PoS » chez un commerçant), ou bien entre deux entreprises ou établissements bancaires. Ces deux contextes peuvent représenter également les activités dans deux pays différents par exemple.

Un problème se pose donc lorsque l'on veut déployer un mécanisme de détection automatique de fraudes dans un nouveau contexte, pour lequel on ne dispose pas encore d'un ensemble d'apprentissage ou bien d'un ensemble d'apprentissage pas assez fourni pour être suffisamment représentatif des transactions à traiter et/ou permettre un bon apprentissage des modèles prédictifs.

L'invention vise à résoudre ce problème et, en tout cas, à améliorer la situation par rapport aux propositions de l'état de la technique.

Résumé de l'invention

Ainsi, l'invention concerne un Procédé pour la détection automatique de fraude dans un flux de transactions destinées à un service disponible sur un réseau de télécommunication, comportant un mécanisme d'apprentissage selon lequel des transactions dudit flux de transactions sont mémorisées dans un premier ensemble de transactions , et selon lequel on associe des étiquettes à au moins une partie des transactions dudit premier ensemble, ce mécanisme d'apprentissage comportant en outre :

- l'entraînement d'un premier modèle de classification par transfert de connaissances depuis un second ensemble de transactions, distinct dudit premier ensemble, dans lequel lesdites transactions sont associées à des étiquettes ; lesdites étiquettes indiquant si une transaction respective est une transaction normale ou une fraude ; et

- l'entraînement d'un second modèle de classification basé sur les transactions et étiquettes du premier et du second ensemble ;

- et un mécanisme de prédiction, selon lequel on génère une probabilité Pc d'une transaction parmi ledit flux d'être une fraude ou une transaction normale en combinant au moins une première probabilité $P_1$ générée par ledit premier modèle et une seconde probabilité $P_2$ générée par ledit second modèle.

Suivant des modes de réalisation préférés, l'invention comprend une ou plusieurs des caractéristiques suivantes qui peuvent être utilisées séparément ou en combinaison partielle entre elles ou en combinaison totale entre elles :

- le premier modèle de classification agrège plusieurs sous-modèles basés sur des technologies différentes ;

- ledit second modèle de classification est un réseau de neurones multicouche ;

- ledit second modèle est entraîné sur un ensemble d'apprentissage constitué de transactions dudit premier ensemble augmenté d'attributs encodant une relation entre ledit premier ensemble et ledit second ensemble ;

- dans le mécanisme de prédiction, on génère une probabilité PC selon Pc= $\alpha.P_1$ + (1-$\alpha$).$P_2$, dans laquelle $\alpha$ représente un paramètre entre 0 et 1 ;

- ledit paramètre $\alpha$ dépend du nombre d'étiquettes associés aux transactions dudit premier ensemble ;

- lesdites transactions sont des transactions financières et ledit service est un service de paiement ;

- on annule ou interrompt ladite transaction avec ledit service si la probabilité indique une fraude, en transmettant un message d'annulation audit service.

- ladite probabilité $P_C$ est également combinée avec une estimation produite par un système à base de règles.

Selon un autre aspect, l'invention concerne également un dispositif pour la détection automatique de fraude dans un flux de transactions destinées à un service disponible sur un réseau de télécommunication ; configuré pour mettre en oeuvre le procédé tel que précédemment décrit.

On comprend donc que selon l'invention, on peut tirer profit à la fois d'ensembles d'apprentissage existants dans d'autres contextes, tout en prenant en compte les biais pouvant exister, ainsi que de l'ensemble d'apprentissage en cours de constitution pour le nouveau contexte, celui de mise en oeuvre du dispositif et du procédé de détection. Selon un mode de réalisation, un plus grand poids pourra être attribué au fil du temps au second ensemble d'apprentissage.

Plus généralement, l'invention permet l'entrainement de modèles prédictifs pour la détection automatique de fraudes à partir d'ensembles d'apprentissage construits, chacun, dans des contextes distincts.

L'invention permet donc de fournir immédiatement un mécanisme de détection automatique de fraude, c'est-à-dire même en l'absence d'un ensemble d'apprentissage dans le contexte où il est déployé, tout en permettant une amélioration des modèles prédictifs au fur et à mesure de la constitution d'un ensemble d'apprentissage dans le contexte de déploiement.

L'invention permet également l'utilisation de plusieurs modèles prédictifs en parallèle afin de tirer profit des avantages relatifs de chacun.

Brève description des figures

La figure 1 illustre une vue schématique d'une architecture dans laquelle l'invention peut s'inscrire selon un de ses modes de réalisation.

Les figures 2a et 2b illustrent des architectures fonctionnelles possibles, selon un mode de réalisation de l'invention, d'un système de détection de fraudes.

La figure 3 schématise un organigramme d'un exemple de modes de réalisation de l'invention.

La figure 4 schématise un exemple de réseau de neurones multicouches antagoniste pouvant être utilisé selon des modes de réalisation de l'invention

La figure 5 schématise un exemple de réseau de neurones multicouches pouvant être utilisé selon des modes de réalisation de l'invention.

Description détaillée de l'invention

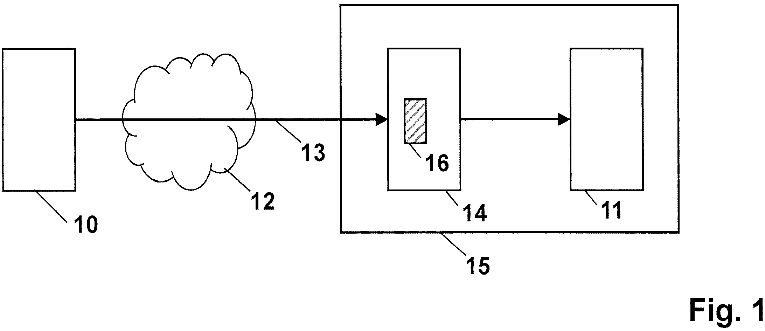

La Figure 1 illustre un contexte fonctionnel très haut niveau dans le cadre duquel l'invention peut être mise en œuvre. Un utilisateur 10 transmet une transaction 13 à un service de gestion de transactions financières 11, comme un service de paiement, à travers un réseau de télécommunication 12. L'utilisateur 10 peut être un terminal de télécommunication avec lequel un ordre de paiement en ligne peut être placé; il peut aussi s'agir d'un terminal de paiement situé chez un commerçant, ou encore un système complexe situé au sein d'un établissement bancaire dans le cadre de transactions inter-banques.

Un dispositif de détection de fraudes 14 peut être inséré en amont, entre le réseau de télécommunication 12 et le service de gestion de transactions financières 11, par exemple au sein d'un même serveur 15 (ou ferme de serveurs).

Le dispositif de détection de fraudes 14 peut utiliser un modèle 16 élaboré par apprentissage puis l'utiliser en prédiction et généralisation pour classer les nouvelles transactions 13 en des classes telles que « fraude » et « transaction normale ».

C'est donc sur la base des exemples qui lui est soumis que le classifieur 16 peut apprendre et, par la suite, traiter des nouvelles transactions. Il en ressort que le dispositif de détection de fraudes 14 peut détecter une fraude que si celle-ci comporte des similitudes avec celles présentés dans le jeu d'apprentissage. Comme il sera vu plus loin, selon l'invention, un mécanisme de transfert de connaissances permet de traiter une transaction qui n'appartient pas au même contexte que celui du jeu d'apprentissage.

Selon un aspect de l'invention, ce modèle 16 est constitué d'un ensemble de modèles prédictifs.

Préalablement à son utilisation permettant de prédire une classe pour une nouvelle transaction entrante, cet ensemble de modèles prédictifs est entrainé sur un ensemble d'apprentissage associant des transactions et des étiquettes. Cet ensemble d'apprentissage est typiquement constitué de transactions réelles qui ont fait l'objet d'une étude afin de leur attribuer une étiquette qui représente une classe réelle, c'est-à-dire si la transaction en question est une tentative de fraude ou une transaction normale. Cette étude peut être automatique ou bien effectué (partiellement ou totalement) par des opérateurs humains. En général, une petite partie des transactions qui ont fait l'objet d'alertes du dispositif de détection de fraudes sont traités par des opérateurs humains. Pour les autres transactions, si dans un certain délai (typiquement un mois) aucune opposition n'a été faite par les porteurs de cartes, les transactions sont considérées comme normales.

L'ensemble d'apprentissage forme donc une suite de transactions s'échelonnant dans le temps, au fur et à mesure de leur arrivée et de leur étude permettant l'attribution d'une étiquette. Typiquement, donc, il existe un lapse de temps entre l'arrivée d'une transaction et sa disponibilité au sein de l'ensemble d'apprentissage (après attribution de son étiquette). On comprend donc que la constitution d'un ensemble d'apprentissage est un processus long, étalé dans le temps.

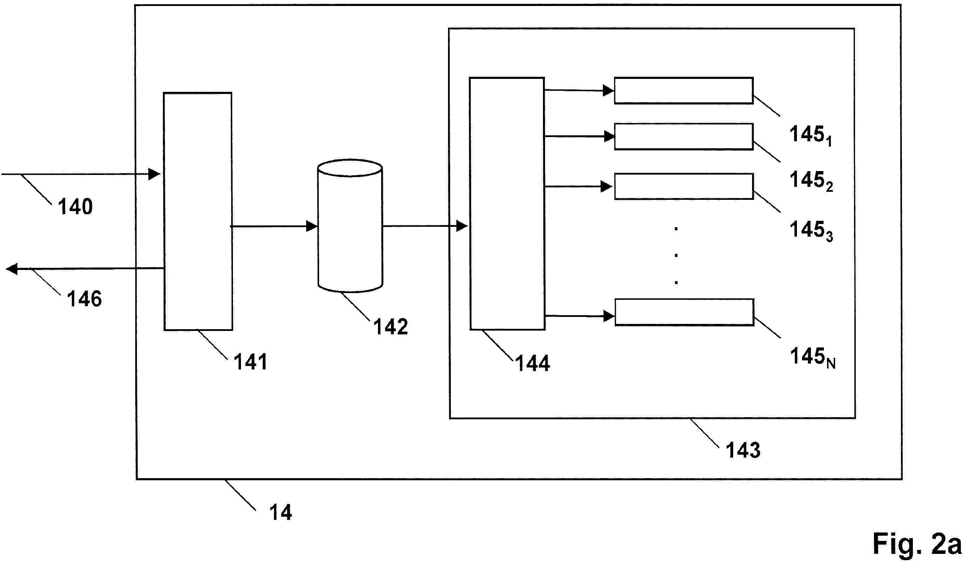

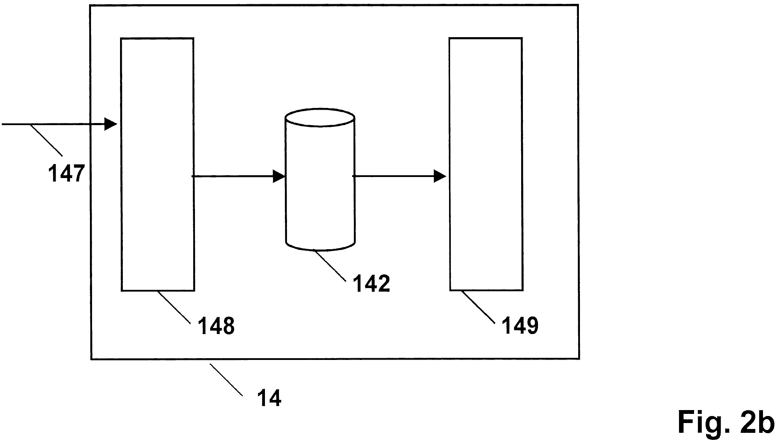

Les figures 2a et 2b illustrent des architectures fonctionnelles possibles, selon un mode de réalisation de l'invention, d'un système de détection de fraudes 14.

La figure 2a illustre une architecture pour la détermination d'une fraude dans un flux de transactions.

Les transactions 140 sont transmises à une interface 141. Ces transactions 140 peuvent par exemple être des objets au format JSON (pour « JavaScript Object Notation »), et comporter un ensemble de caractéristiques (ou « features » selon la terminologie en langue anglaise) par exemple sous la forme de paires clés / valeurs.

Des exemples de caractéristiques peuvent comprendre le montant de la transaction, la monnaie, des identifiants des parties, etc.

L'interface 141 est accessible aux émetteurs de transactions qui peuvent être des dispositifs permettant le paiement en ligne (ordinateurs, terminaux de télécommunication de type « smartphone », tablettes numériques, etc.), des dispositifs de paiement de type bornes de paiement ou PoS (« Point of Sale »), des dispositifs ou serveurs installés dans un établissement bancaire pour des transactions interbancaires, etc. L'accès peut se faire par des réseaux de télécommunication privés et sécurisés ou par des réseaux de télécommunication ouverts, notamment par internet.

En particulier, l'interface 141 peut être accessible en tant que service web. Notamment, l'interface 141 peut être un service web de type REST (pour « Representational State Transfer » en anglais) ou « RESTful ». Les services web REST permettent aux dispositifs émetteurs effectuant des requêtes (transmission d'une transaction par exemple) de manipuler des ressources web via leurs représentations textuelles à travers un ensemble d'opérations uniformes et prédéfinies sans état.

Les transactions 140 reçues par l'interface 141 sont mémorisées dans une base de données 142, par exemple sous forme d'objets. Eventuellement, des caractéristiques supplémentaires peuvent être ajoutées aux transactions avant leur mémorisation, telles que par exemple un horodatage correspondant au moment auquel la transaction a été reçue par l'interface 141.

Les transactions mémorisées dans la base de données 142 peuvent alors être traitées par le moteur d'inférence 143. Celui-ci a pour but de calculer des prédictions pour chaque nouvelle transaction, permettant de déterminer si cette transaction est une fraude ou non. Cette dernière détermination peut être effectuée par un système tiers, en aval du moteur d'inférence 143. Cette prédiction peut être un (ou plusieurs) scores par exemple. Comme il sera vu plus loin, plusieurs modèles prédictifs peuvent être utilisés de sorte qu'une même transaction peut faire l'objet de plusieurs prédictions.

Certains modèles nécessitent un enrichissement des transactions : les traitements peuvent ajouter par exemple des caractéristiques contextuelles, ou, par agrégation, des caractéristiques déterminées à partir de transactions précédentes. Les probabilités de fraudes sont donc calculées par l'application successive d'une chaîne de traitements et de modèles par le moteur d'inférence 143.

A titre d'exemples illustratifs de caractéristiques contextuelles, le système peut consulter un calendrier afin de corréler la date de la transaction avec un événement (jour de la semaine, vacances, fêtes calendaires, événement sportif important, etc.). Ces caractéristiques enrichies permettent au dispositif de détection automatique de fraudes, reposant sur un système à apprentissage, de réaliser des meilleurs modélisations et, donc, de meilleurs généralisations pour prédire les transactions frauduleuses.

Un autre exemple peut être d'ajouter des caractéristiques agrégées aux transactions entrantes. Il peut par exemple s'agir de la valeur moyenne des transactions pour un utilisateur donné, ou bien la valeur totale de ses transactions sur une durée donnée (un mois ou un jour par exemple). Pour ce faire, une mémoire tampon peut être mises en place, afin de pouvoir effectuer des agrégations sur une période donnée. La mémoire tampon doit alors être dimensionnée en fonction des périodes envisagées pour les agrégations. Une autre caractéristique peut être le montant sommé de l'ensemble des transactions reçus d'un même terminal durant une certaine période (par exemple sur une journée).

Une prédiction peut être considérée comme complète lorsque l'ensemble des modèles prédictifs disponibles, ou bien un sous-ensemble prédéterminé de ceux-ci (par exemple déterminé par un nombre seuil) ont fourni une prédiction (score, etc.).

Selon un mode de réalisation, pour chaque transaction 140, une réponse 146 est transmise au dispositif émetteur de la transaction. Une temporisation peut être prévue pour renvoyer cette réponse : l'interface 141 vérifie le statut de la transaction dans la base de données 142. Si une prédiction a été établie par le moteur d'inférence 143 (sous la forme d'un score), l'interface peut renvoyer un message contenant cette prédiction. Si une prédiction n'a pas pu être établie lorsque la temporisation est écoulée, un message peut tout de même être renvoyée à l'émetteur de la transaction sans prédiction (ou score).

Selon un mode de réalisation, l'interface peut régulièrement consulter la transaction dans la base de données 142, et lorsque la transaction a été totalement évaluée par le moteur d'inférence permettant la détermination d'une prédiction complète (par exemple, sous la forme d'un score), un message peut être envoyé par l'interface 141 vers le dispositif émetteur contenant cette prédiction complète.

Selon un mode de réalisation, les dispositifs émetteurs de transaction peuvent transmettre une requête à l'interface 141, afin que celle-ci consulte à nouveau la base de données 142. L'objectif est de permettre d'obtenir une prédiction complète dans le cas où la temporisation ne l'aurait pas permis. L'interface renvoie alors un nouveau message avec la/les nouvelles prédictions, le cas échéant. Ce mode de fonctionnement permet d'obtenir une prédiction (même incomplète) lorsque cela est nécessaire pour le dispositif émetteur.

La base de données 142 permet donc une séparation entre l'interface 141 configurée pour échanger avec les dispositifs émetteurs de transaction et le moteur d'inférence 143. Ceux-ci peuvent donc fonctionner de façon totalement asynchrone.

Selon un mode de réalisation, le moteur d'inférence 143 peut être composé d'un (ou éventuellement plusieurs) module de répartition 144 (ou « *dispatcheur* » selon une terminologie en langue anglaise) et un ensemble de N modules d'exécution $145_1$, $145_2$, $145_3$... $145_N$.

Le module de répartition consulte la base de données 142, de façon périodique ou continue, pour y rechercher les nouvelles transactions 140, et les placer dans une file d'attente, préférentiellement de type FIFO (« *First In, First Out* »).

Les modules d'exécution peuvent consommer les transactions mises dans la file d'attente.

Selon un mode de réalisation, les modules d'exécution peuvent appliquer un ou plusieurs traitements et un ou plusieurs modèles. Un traitement prend un objet en entrée, créé des nouvelles caractéristiques (qui peuvent être vues comme des paramètres de l'objet) et, en sortie, stocke ces nouvelles caractéristiques dans l'objet dans la base de données 142. L'objet ainsi enrichi peut ensuite être soumis à un nouveau traitement pour compléter ses caractéristiques et/ou à un modèle prédictif, jusqu'à obtenir une prédiction complète de l'objet (c'est-à-dire de la transaction qu'il représente).

Selon un mode de réalisation, lors du démarrage, les modules d'exécution listent les modèles prédictifs qu'ils peuvent appliquer et déterminent les caractéristiques dont chaque modèle a besoin pour s'appliquer à un objet ; ils listent également les traitements qu'ils peuvent appliquer et déterminent les caractéristiques que chaque traitement peut déterminer. Ainsi, les modules d'exécution peuvent ordonnancer l'exécution des traitements et des modèles prédictifs, de sorte que les modèles prédictifs soient appliqués au plus tôt afin que les objets puissent se voir attribuer des prédictions aussi vite que possible.

Les modèles d'exécution peuvent être déployés sous la forme d'un module logiciel multi-fils (ou « *multi-threaded* » selon la terminologie anglaise plus commune) afin de permettre l'application de plusieurs traitements et modèles prédictifs en parallèle.

Lorsqu'un modèle prédictif est appliqué, sa prédiction peut également être stockée au sein de l'objet, en tant que paramètre de cet objet.

La prédiction peut être complète pour un objet donné lorsque l'ensemble de ces paramètres ont été déterminées (y compris les paramètres correspondant à des prédictions, ou scores). Lorsque la prédiction d'un objet est complète, le module d'exécution peut prendre un nouvel objet dans la file d'attente alimentée par le module de répartition 144.

Le nombre N de modules d'exécution peut être adapté dynamiquement (automatiquement ou manuelle) pour répondre à la charge des objets à traiter (c'est-à-dire des transactions 140 du flux de transactions entrant). De la sorte, un plus grand nombre d'objets pourront être traités en parallèle par le système de détection de fraude 14.

Lorsqu'un module d'exécution est lancé (par exemple au démarrage du système), il peut rechercher les traitements et modèles prédictifs disponibles. Aussi, lorsqu'un nouveau modèle prédictif est disponible, il peut suffire de lancer des nouveaux modules d'exécution ou de relancer les modules existants. Le nouveau modèle est pris en compte de façon fluide et transparente, sans interrompre le système et sans perte de transaction.

La figure 2b illustre une architecture pour la phase d'apprentissage du système de détection automatique de fraudes.

Selon ce mode de réalisation, le système de détection de fraude 14 dispose d'une interface 148 qui peut être distincte de l'interface 141 destinée à la réception des flux de transactions. Cette interface 148 permet de recevoir des étiquettes attribuées aux objets stockés dans la base de données 141.

Ces étiquettes viennent enrichir les transactions stockées dans la base de données 142 et qui peuvent alors être consommées par le module d'entraînement 149.

Ce module d'entrainement 149 peut périodiquement ou continument vérifier les objets auxquels une étiquette vient d'être nouvellement attribuée. Par exemple, si leur nombre dépasse un seuil prédéterminé, le module d'entrainement peut déclencher l'entrainement d'un ou plusieurs modèles.

Plusieurs types d'entrainement des modèles prédictifs peuvent être envisagés. Notamment, certains modèles peuvent être entrainés de façon incrémentale, et les nouveaux objets peuvent alors être utilisés pour ré-entrainer ce type de modèles. D'autres modèles ne sont pas incrémentaux et peuvent être entrainé sur la base d'un ensemble, correspondant à une période temporelle, de ces nouveaux objets étiquetés.

Lorsqu'un modèle est ainsi créé ou reentrainé, il est rendu disponible aux modules d'exécution du moteur d'inférence 143, par exemple en les stockant dans la base de données 142.

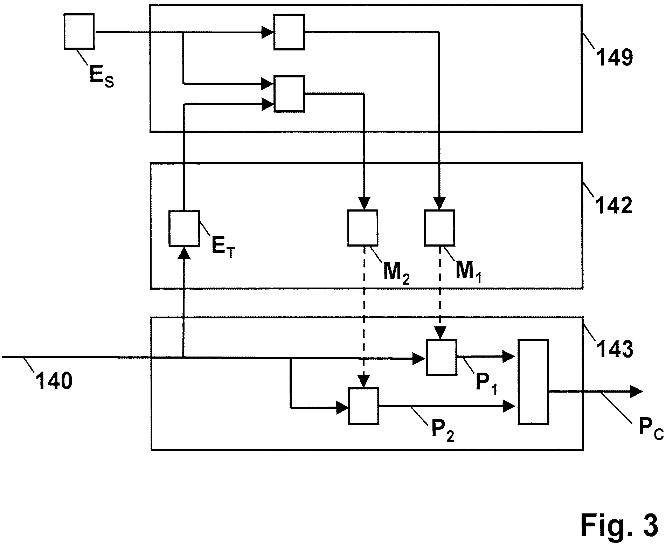

Selon un aspect de l'invention, au moins deux modèles sont utilisés pour la détermination d'une prédiction pour une transaction. Ce mécanisme est illustré par la figure 3 qui schématise de façon fonctionnelle un procédé selon un mode de réalisation de l'invention.

Pour une transaction entrante donnée 140, une prédiction Pc est calculée en combinant une première prédiction $P_1$ déterminée par un premier modèle $M_1$ et une seconde prédiction $P_2$ déterminée par un second modèle $M_2$. Cette prédiction détermine si la transaction est une transaction en fraude ou normale. Par exemple, la prédiction peut être issue d'un seuillage permettant de fournir une classification binaire à partir d'une probabilité issue de cette combinaison.

Ces (au moins) deux modèles diffèrent notamment par les ensembles d'apprentissage sur lesquels ont été effectués leurs entrainements. Le module d'entrainement 149 peut créer, entrainer ou réentrainer ces différences modèles, $M_1$, $M_2$.

Ainsi, le premier modèle $M_1$ est basé et entrainé sur un second ensemble d'apprentissage $E_S$ dit « source » qui est distinct du premier ensemble d'apprentissage $E_T$, dit « cible », stocké dans la base de données 142 et formé des transactions 140 précédentes dans le flux de transaction.

Le second modèle $M_2$ est basé et entrainé sur les premier et second ensembles d'apprentissages $E_T$ et $E_S$.

Cet ensemble d'apprentissage source Es peut provenir d'un autre contexte de déploiement du système de détection de fraudes. Cet autre contexte peut être un autre pays, un autre champ d'application, une autre population, etc. Ce changement de contexte d'application engendre des biais dans les statistiques des ensembles d'apprentissage, de sorte qu'un modèle prédictif entrainé sur un ensemble d'apprentissage d'un contexte donné risque être peu performant pour inférer une prédiction pour une transaction d'un contexte distinct.

Selon un mode de réalisation, plusieurs ensembles d'apprentissage sources Es peuvent être utilisés. Dans un tel cas, les modèles $M_2$ et $M_1$ peuvent être des ensembles de modèles entrainés sur plusieurs sources ou un seul modèle, chacun, prenant en compte ces différents ensembles d'apprentissage sources. Pour la simplicité de l'exposé, et sans perte de généralité, on conservera les termes de premier et second modèles, même dans le cas où ceux-ci comportent plusieurs (sous-) modèles entrainés à partir de sources différentes.

Un cas d'application peut être le passage d'un ensemble d'entrainement source Es constitué de transactions dans un contexte de paiement en ligne vers un contexte cible qui est celui du paiement à partir d'une borne de type « PoS » installée chez un commerçant. Dans le premier domaine, on suppose que l'historique est important, ce qui a permis d'associer un grand nombre d'étiquettes aux transactions reçues. Par contre, l'application du système de détection de fraude au second domaine est nouvelle et on ne dispose pas, ou pas suffisamment, de données étiquetées pour permettre un apprentissage efficace sur un ensemble d'apprentissage $E_T$ propre à ce contexte cible.

Il peut en être de même lorsque l'on souhaite utiliser un système de détection de fraudes dans un nouveau pays, pour lequel on ne dispose pas, ou pas suffisamment, de données historiques.

Selon un aspect de l'invention, on utilise les connaissances acquises (et matérialisées par un ensemble d'apprentissage source, Es étiqueté) pour une exploitation dans un domaine cible. Ce mécanisme correspond à la problématique générale de l'apprentissage par transfert de connaissances, ou « *transfer learning* » en langue anglaise.

Le transfert de connaissance pour l'apprentissage machine a été formalisé, notamment dans l'article de S. J. Pan, Q. Yang, « A Survey on Transfer Learning », in IEEE Transactions on Knowledge and Data Engineering, vol. 22, pages 1345-1359, octobre 2010. Une présentation en est faite également dans l'encyclopédie en ligne Wikipedia, à l'adresse https://en.wikipedia.org/wiki/Transfer learning, ou encore dans le mémoire de thèse de Ying Lu, « Transfer Learning for Image Classification », Université de Lyon, 2017, NNT : 2017LYSEC045.

Selon des modes de réalisation de l'invention, le premier modèle $M_1$ est basé uniquement sur l'ensemble d'apprentissage source $E_S$ par transfert de connaissance. Ce premier modèle $M_1$ permet de tirer profit de l'ensemble des connaissances acquises sur le premier contexte et matérialisées dans l'ensemble d'apprentissage Es pour effectuer des prédictions $P_1$ sur les transactions du second contexte.

Différentes techniques peuvent être utilisées, en fonction du type de modèle $M_1$.

Des exemples de modèles pouvant être utilisés comprennent un classifieur bayésien naïf, un réseau de neurones multicouche profond, une forêt d'arbres, un classifieur basé sur un algorithme itératif de minimisation des résidus basé sur le gradient (ou « *gradient boosting* » en anglais), etc.

Certains types de modèles peuvent prendre en entrée directement les caractéristiques des objets de l'ensemble d'apprentissage source $E_S$. C'est notamment le cas des forêts d'arbres, d'algorithmes itératifs de minimisation des résidus basé sur le gradient, etc. En particulier, les caractéristiques à valeurs numériques ou à valeurs discrètes peuvent être utilisées telles quelles dans le processus d'apprentissage.

Les algorithmes et bibliothèques « xgboost » ou « catboost » peuvent par exemple être utilisées pour mettre en œuvre un modèle prédictif basé sur la stimulation de gradient. XGBoost est une bibliothèque logicielle en source ouvert *(« open source »)* permettant de mettre en œuvre des méthodes de « Gradient boosting » en R, Python et Julia. Elle est accessible, ainsi que sa documentation, sur le site https://xgboost.ai. Catboost est une autre bibliothèque du même genre, accessible sur le site web : https://catboost.ai

Selon un mode de réalisation de l'invention, plusieurs modèles prédictifs peuvent être utilisés de sorte qu'une même transaction peut faire l'objet de plusieurs prédictions. Ces sous-modèles peuvent mettre en œuvre des technologies différentes afin de tirer profit des avantages de chaque technologie. Ainsi, le premier modèle M1 peut agréger (par « stacking ») un sous-modèle basé sur classifieur bayésien naïf, un classifieur basé sur le XG boosting, un classifieur basé sur un réseau de neurones multicouche, etc.

Dans le cas d'une mise en œuvre du premier modèle $M_1$ basé sur un classifieur bayésien naïf, les valeurs des caractéristiques doivent préalablement être normalisées. Notamment, les valeurs discrètes (correspondant à des catégories) doivent être converties en valeurs numériques, puis l'ensemble des valeurs de caractéristiques peuvent être normalisées dans un intervalle [0, 1].

Dans une telle mise en œuvre, les inventeurs ont remarqué, grâce à de multiples expérimentations sur des données réelles, que la normalisation permettait d'augmenter singulièrement les performances du classifieur. Cette normalisation est effectuée, de façon indépendante, sur les caractéristiques des ensembles d'apprentissage source $E_S$ et cible $E_T$.

Selon un mode de réalisation, le modèle $M_1$ repose sur l'hypothèse que les caractéristiques sont statistiquement indépendantes. Un tel modèle peut être un classifieur bayésien naïf (le terme « naïf » faisant référence à cette hypothèse d'indépendance des caractéristiques). La classification naïve bayésienne est un type de classification bayésienne probabiliste basée sur le théorème de Bayes avec une forte indépendance (dite naïve) des hypothèses. Elle met en œuvre un classifieur bayésien naïf, ou classifieur naïf de Bayes, appartenant à la famille des classifieurs linéaires. Un terme plus approprié pour le modèle probabiliste sous-jacent pourrait être « modèle à caractéristiques statistiquement indépendantes ». En termes simples, un classifieur bayésien naïf suppose que l'existence d'une caractéristique pour une classe, est indépendante de l'existence d'autres caractéristiques. Néanmoins, l'efficacité de ce type de classifieurs, malgré leur hypothèse forte, a été montrée, notamment dans Harry Zhang "The Optimality of Naive Bayes". Conférence FLAIRS2004.

Un tel modèle peut se baser sur le théorème de Bayes que l'on peut écrire de la façon suivante :

[Math 1]

$$P\big(y = 1 \big| X_i, 1 < i < n_f\big) = \prod_{i=1}^{n_f} \frac{P_S(X_i | y = 1).P_S(y = 1)}{P_S(X_i | y = 0).P_S(y = 0) + P_S(X_i | y = 1).P_S(y = 1)}$$

avec :

- y représentant une étiquette, y=1 et y=0 indiquant que la transaction est étiqueté comme fraude ou normale, respectivement ;
- $P_S(X_i|y=1)$ et $P_S(X_i|y=0)$ représentant la probabilité conditionnelle d'observer la valeur $X_i$ pour la caractéristique i, étant donné que la transaction est une fraude (y=1) ou normale (y=0), respectivement ;
- $P_S(y=1)$ et $P_S(y=0)$ représentant la probabilité marginale de la transaction d'être une fraude ou normale, respectivement ;
- $n_f$ est le nombre de caractéristiques et i l'indice indiquant une caractéristique de sorte que $1 < i < n_f$.

Ces probabilités peuvent être déterminées en utilisant un histogramme par caractéristiques, typiquement en échantillonnant l'espace des valeurs prises en 100, ce nombre ayant été établi expérimentalement.

Selon un aspect de l'invention, au moins un second modèle $M_2$ peut être utilisé pour fournir une seconde prédiction $P_2$, ce second modèle étant basé sur une combinaison des données des ensembles d'apprentissage source et cible.

Selon un mode de réalisation, les caractéristiques des objets de l'ensemble d'apprentissage source $E_S$ sont transformées selon une fonction de distribution qui correspond à la fonction empirique de distribution des caractéristiques des objets de l'ensemble d'apprentissage cible $E_T$. Cette transformation peut être effectuée pour chaque caractéristique indépendamment.

Cette étape de normalisation est optionnelle et peut être omise, notamment dans le cas où la fonction empirique de distribution n'est pas suffisamment consistante.

Le second modèle $M_2$ peut (tout comme le premier modèle $M_1$) être de différentes natures. On peut notamment citer les forêts d'arbres aléatoires (« *random forests* » en anglais), les algorithmes itératifs de minimisation des résidus basé sur le gradient (ou « *gradient boosting* »), les réseaux de neurones multicouches, etc.

Selon un mode de réalisation, un réseau de neurones multicouches est utilisé, en particulier un réseau de neurones profond (« *deep neural network* », DNN, en langue anglaise). Ce réseau de neurones peut être entrainé sur une combinaison des deux ensembles d'apprentissage, éventuellement après une étape de transformation et normalisation telle que précédemment décrite.

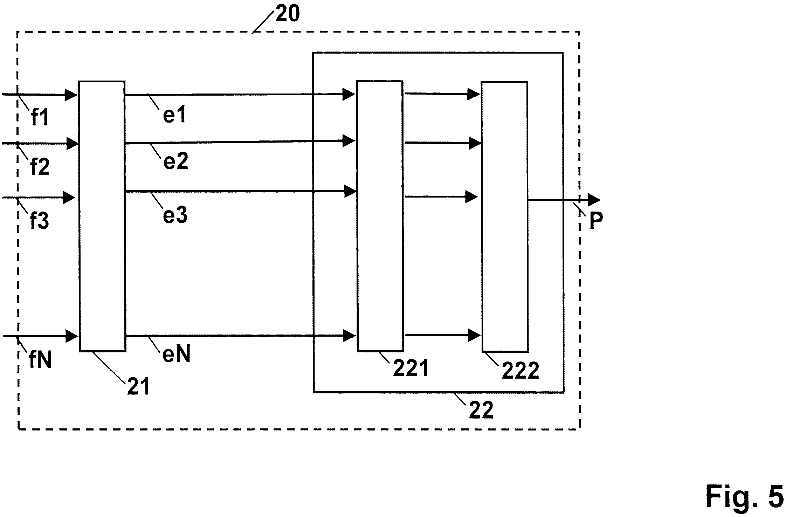

Un exemple de réseau de neurones 20 pouvant mettre en œuvre le modèle prédictif $M_2$ est illustré en figure 5.

L'ensemble de ces paramètres forment un vecteur f1, f2, f3... fN constituant l'entrée du réseau de neurones 20 (N étant le nombre de caractéristiques des transactions).

Selon un mode de réalisation, le réseau de neurones 20 peut se décomposer entre un sous-réseau de prétraitement 21, et un sous-réseau de prédiction 22.

Le sous-réseau de prétraitement permet de transformer les paramètres f1, f2, f3... fN en un vecteur e1, e2, e3... eM afin que le sous-réseau de prédiction 22 puisse traiter l'information. Le sous-réseau de prétraitement 21 peut mettre en œuvre deux types de prétraitements en fonction de la nature des paramètres.

Pour les paramètres numériques, il est intéressant de les normaliser. Pour ce faire, on peut diviser leur valeur x par leur écart-type $\delta$ calculé sur un ensemble de transactions passées (par exemple, celles stockées dans la mémoire tampon). On peut ensuite appliquer une fonction logarithmique. Préférentiellement, on peut ajouter la valeur 1 préalablement afin d'obtenir une valeur normalisée $\overline{x}$ dans la zone de la fonction logarithmique présentant une dérivée moindre.

Cela permet ainsi d'obtenir une distribution de valeurs plus proche d'une courbe gaussienne, ce qui améliorer la capacité d'apprentissage du sous-réseau de neurones de prédiction 22.

Cette relation donnant la valeur normalisée peut s'exprimer par l'équation suivante :

$$\bar{x} = \frac{log(x + 1)}{\delta} - m$$

dans laquelle $\delta$ est l'ecart type et m la moyenne des log(1+x) des transactions passées, ou x est la valeur de l'attribut pour ces transactions passées. Le logarithme népérien peut être utilisé.

Les paramètres catégoriels sont fournis en entrée d'une couche d'inclusion, ou « *embedding layer* » selon la terminologie en langue anglaise, afin de le transformer en un vecteur de valeurs réelles, dont la dimension est calculée selon la formule $log^2(ncat)$ où ncat est le nombre de catégories pouvant être prises par la paramètre catégoriel traité.

Selon un exemple concret de réalisation pour la détection de fraudes dans des transactions financières, on peut compter a=15 paramètres catégoriels et b=60 paramètres numériques. Il y a donc N=a+b=75 paramètres f1, f2, f3....f75 en entrée du réseau de neurones 20. Après transformation par la couche d'inclusion, la taille du vecteur correspondant aux paramètres catégoriels est de a'=50. On obtient donc en entrée du réseau de neurones un vecteur de dimension M=a'+b, soit M=110 dans cet exemple, e1, e2, e3... e110.

Ce vecteur peut être obtenu par simple concaténation des sorties du sous-réseau de prétraitement 21 pour chacun des paramètres associés aux transactions (c'est-à-dire contenus dans les transactions ou faisant l'objet d'un enrichissement).

Ce vecteur forme donc l'entrée du sous-réseau de prédiction 22. Celui-ci peut être un réseau de neurones de type perceptron multi-couches, typiquement avec une couche cachée 221 et une couche de sortie 222. Selon l'exemple pratique ci-dessus, un dimensionnement possible peut être de 1000 neurones pour la couche cachée et 2 neurones pour la couche de sortie, avec une fonction « softmax » pour la sortie P. Les connexions entre neurones de la couche cachée et la couche de sortie peuvent être de type « Relu » (pour « *Rectified Linear Unit* »).

Plusieurs techniques d'optimisation existent. On peut notamment citer l'algorithme de la descente du gradient stochastique (DGS ou SGD en anglais pour « *Stochastic Gradient Descent* »), décrit par exemple dans LeCun, Yann A., et al. "Efficient backprop. Neural networks: Tricks of the trade", Springer Berlin Heidelberg, 2012. 9-48. On peut également citer ADAM, décrit initialement dans Diederik P. Kingma and Jimmy Lei Ba. "Adam : A method for stochastic optimization". 2014. arXiv:1412.6980v9, ou bien RMSprop, décrit notamment dans Tijmen Tieleman et Geoffrey Hinton, « Lecture 6.5-rmsprop: Divide the gradient by a running average of its recent magnitude ». COURSERA: neural networks for machine learning, 4(2):26-31, 2012. De façon empirique, les inventeurs ont déterminés que la méthode d'optimisation RMSprop donnait les meilleurs résultats.

Selon un mode de réalisation de l'invention, le modèle $M_2$ est un réseau de neurones antagoniste ou « *Adversarial Neural Network* » en anglais. Ce type de réseau a été notamment décrit dans l'article de Ganin Y., Ustinova E., Ajakan H., Germain P., Larochelle H., Laviolette F., Marchand M., Lempitsky V., « Domain-adversarial training of neural networks », Journal of Machine Learning Resources, 17(1), 2096-2030 (2016).

Ce mode de réalisation se base sur l'idée que le modèle prédictif ne doit pas discriminer entre les transactions des ensembles d'apprentissage source Es et cible $E_T$. Contrairement à l'article de Ganin et al., dans notre situation, les deux ensembles d'apprentissage disposent d'étiquettes (même si partiellement pour l'ensemble cible $E_T$).

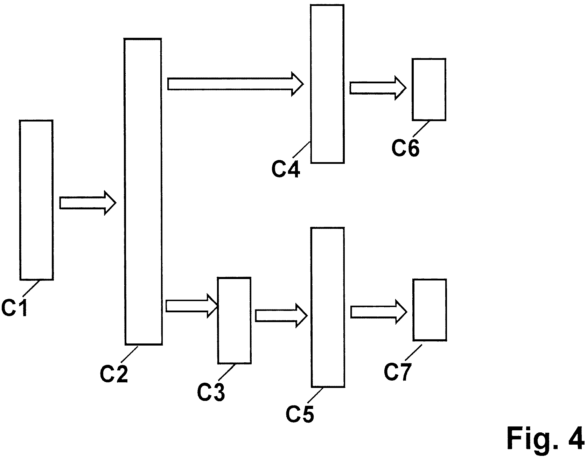

La figure 4 schématise un tel réseau antagoniste. Cette figure est inspirée de l'article de Ganin et al. suscité et de la thèse de Ying Lu, également suscitée, page 40.

Une couche d'entrée C1 permet de représenter un vecteur représentatif d'une transaction des ensembles d'apprentissage cible ou source. Les couches C6 et C7 forment les couches de sortie et indiquent, respectivement, une prédiction d'étiquette (fraude ou normale) et une prédiction de domaine (source ou cible).

Les couches C1, C2, C3, C4, C5, C6, C7 sont entièrement connectés de proche en proche, selon le modèle classique du réseau de neurones (ou perceptron) multicouche.

Ce modèle permet d'apprendre des caractéristiques invariantes par l'optimisation d'une couche de caractéristiques C2 en fonction d'une part de la couche de prédiction des étiquettes C4 et de la couche de prédiction du domaine C5. La couche de prédiction du domaine peut être remplacée par un sous-réseau formée de plusieurs couches entièrement connectées, et peut utiliser également une couche C3 de gradient inverse (« *gradient reversai layer* », GRL). L'effet de cette couche GRL est de multiplier les gradients relatifs au domaine (cible ou source) par une constante négative λ durant la phase d'apprentissage par rétro-propagation du gradient de l'erreur en sortie.

Ainsi, durant l'apprentissage, la couche de caractéristique C2 est optimisée de sorte à minimiser le coût (ou « *loss* ») en prédiction d'étiquettes et à maximiser (du fait de la couche C3) le coût de la prédiction en domaine.

Le paramètre λ, qui peut être déterminé expérimentalement, permet une balance entre la contribution de ces deux objectifs d'optimisation.

Ce réseau de neurone antagoniste permet l'émergence des caractéristiques qui sont discriminantes pour la prédiction de l'étiquette (fraude versus normale) mais non-discriminantes vis-à-vis de la prédiction du domaine.

Ainsi, l'apprentissage du réseau de neurones relatif à la prédiction de l'étiquette « fraude versus normal » est agnostique vis-à-vis du domaine, et il peut être utilisé en prédiction sur de nouvelles transactions en minimisant le biais pouvant exister entre l'ensemble d'apprentissage source et le flux de transactions à traiter.

Selon un mode de réalisation de l'invention, le modèle prédictif $M_2$ peut être entrainé sur un ensemble d'apprentissage constitué de transactions de l'ensemble d'apprentissage source $E_S$ augmentées d'attributs encodant une relation entre les deux ensembles d'apprentissage, source $E_S$ et cible $E_T$.

Ces attributs peuvent être mis en œuvre par des caractéristiques des transactions. Ainsi, pour chaque transaction de cet ensemble d'apprentissage, on peut ajouter ces attributs comme autant de caractéristiques supplémentaires.

Ces attributs, ou caractéristiques, peuvent être mis en œuvre de différentes façons pour encoder la relation entre les deux ensembles d'apprentissage.

A titre d'exemples, ces attributs peuvent comprendre un ou plusieurs attributs parmi :

- Un premier attribut peut être une prédiction, Pred1, établie en entrainant un classifieur (par exemple un réseau de neurones ou une forêt d'arbres aléatoire) sur l'ensemble d'apprentissage source $E_S$ uniquement et en déterminant la probabilité conditionnelle des transactions des deux ensembles d'apprentissage, s'il s'agissait d'une transaction de l'ensemble d'apprentissage source $E_S$.

- D'autres attributs Pca1, Pca2, Pca3, Pca4, Pca5... peuvent être déterminés en établissant une analyse en composantes principales (PCA pour *« Principal Component Analysis »*) sur l'ensemble d'apprentissage source $E_S$, puis en projetant les transactions des deux ensembles d'apprentissage, source $E_S$ et cible $E_T$ sur les premières composantes principale. Par exemple, on peut retenir les 5 premières composantes principales. Ce nombre peut dépendre en fonction des jeux d'entrainement.

Selon un mode de réalisation, donc, à chaque transaction, on ajoute ces nouvelles caractéristiques, Pred1, Pca1, Pca2, Pca3, Pca4, Pca5...

Ces caractéristiques supplémentaires permettent d'encoder (ou « capturer », représenter...) les relations pouvant exister entre les deux ensembles d'apprentissage, à la fois concernant les probabilités conditionnelles et marginales.

Ces caractéristiques supplémentaires constituent un ensemble d'apprentissage « augmenté » qui peut être utilisé pour entrainer le, ou les, seconds modèles $M_2$. Ce second modèle peut être un réseau de neurones multicouches, notamment du type de ceux précédemment décrits en connexion aux figures 4 et 5, ou une forêt d'arbres aléatoire, par exemple.

Comme précédemment évoqué, selon un aspect de l'invention, le moteur d'inférence 143 génère une probabilité Pc d'une transaction 140 parmi le flux entrant d'être une fraude ou une transaction normale en combinant au moins une première probabilité $P_1$ générée par le premier modèle $M_1$ et une seconde probabilité $P_2$ générée par le second modèle, $M_2$.

Selon un mode de réalisation, on génère une probabilité $P_C$ selon $P_C = \alpha.P_1 + (1-\alpha).P_2$, dans laquelle $\alpha$ représente un paramètre entre 0 et 1 permettant de pondérer les contributions respectives de chacun des modèles $M_1$, $M_2$. Selon différentes expérimentations, on peut fixer, par exemple, ce paramètre à des valeurs décroissantes au cours du temps, telles que 0.9, 0.7, 0.5, 0.3, 0.1...

Selon un mode de réalisation, le paramètre $\alpha$ dépend du nombre d'étiquettes associés aux transactions dudit premier ensemble, c'est-à-dire de l'ensemble d'apprentissage cible $E_T$.

En effet, dans un état initial, l'ensemble d'apprentissage cible $E_T$ peut d'une part être peu peuplé, mais d'autre part n'avoir qu'un petit nombre des transactions associées à des étiquettes. Comme on l'a vu précédemment, l'étape d'étiquetage peut être partiellement automatisée, mais la contribution humaine y est importante, et dans tous les cas, les étiquettes ne peuvent être établies qu'après un temps important après la réception des transactions. Il est difficile, et il peut être très coûteux, de diminuer ce temps.

Aussi, lorsqu'il existe peu d'étiquettes dans l'ensemble d'apprentissage cible $E_T$, on peut établir une valeur importante pour le paramètre $\alpha$ afin que la contribution du second modèle $M_2$ basé sur une combinaison des deux ensembles d'apprentissage soit faible. Puis, on peut faire diminuer la valeur du paramètre $\alpha$ au fur et à mesure que des transactions sont étiquetées dans l'ensemble d'apprentissage cible $E_T$.

Par exemple, le paramètre $\alpha$ peut évoluer selon une loi du type

[Math 2]

$$\propto = e^{-c.\frac{L_T}{L_S}}$$

où $L_T$ et $L_S$ représentent respectivement les nombres de transactions étiquetées dans les ensembles d'apprentissages cible $E_T$ et source $E_S$, et « c » est une constante dont la valeur peut être fixée en faisant la validation croisée pour pouvoir maximiser la performance dans le domaine cible

Ainsi, l'invention permet de tirer profit des avantages de chacun des ensembles d'apprentissage et de capturer au mieux leurs capacités à générer des modèles prédictifs permettant de généraliser sur les flux de transactions entrant, au cours du temps, et notamment en fonction du temps d'étiquetage de l'ensemble d'apprentissage cible.

Selon un mode de réalisation, le moteur d'inférence 143 est prévu pour produire une probabilité finale, $P_C$, en combinant la probabilité issue de la combinaison des modèles prédictifs, $M_1$, $M_2$, avec une estimation produite par un système à base de règles.

Le système à base de règles (ou « système expert ») peut se baser sur des règles écrites par des experts humains et définissant comment une estimation du caractère frauduleux d'une transaction peut être induite à partir des informations dont on dispose (c'est-à-dire de l'ensemble des caractéristiques de la transaction stockée dans la base de données 142 après éventuel enrichissement par des caractéristiques supplémentaires).

Les règles peuvent être définies de sorte à induire une estimation d'être une fraude lorsqu'un ensemble de conditions, ou prémisses, sur ces caractéristiques sont remplies. En conséquence, l'estimation globale du système peut être le « ou » logique des résultats des différentes règles d'inférence.

La combinaison finale peut être pondérée par des poids relatifs que l'on attribue aux contributions des modèles prédictifs d'une part et du système à base de règles d'autre part.

La prédiction finale du dispositif de détection automatique de fraudes 14 peut être une probabilité pour une transaction entrante d'être ou non une fraude. Cette prédiction peut être simplement seuillée pour fournir une classification binaire entre une classe fraude et une classe normale, ou bien cette probabilité peut être utilisée pour fournir un facteur de risque ou de certitude sur l'estimation finale.

Cette prédiction peut permettre de déclencher des actions automatiques.

Par exemple, comme on a vu précédemment, dans le cadre de certaines transactions en prépaiement, le résultat du dispositif de détection de fraude peut être attendu avant de poursuivre la procédure de traitement de la transaction (et donc de fournir le service ou produit d'une part, et de procéder au paiement effectif d'autre part).

Dans certains cas, le dispositif de détection de fraudes peut être utilisée sur des transactions ayant déjà été finalisées (paiement effectué), mais il peut être possible de l'annuler. En ce cas, la prédiction peut automatiquement déclencher cette annulation en transmettant un message au service de gestion de transactions financières 11

D'une façon générale, si la prédiction, ou probabilité, établie indique une fraude, on peut automatiquement interrompre ou annuler la transaction en cours avec le service de gestion de transactions financières 11.

Aussi, grâce à la meilleure prédiction apportée par le dispositif de détection automatique de fraudes selon l'invention, on peut bloquer un plus grand nombre de fraudes, tout en évitant de bloquer des transactions normales classées à tort comme frauduleuses (« fausses alertes »).

Ces dernières situations sont également pénalisantes car entrainant des pertes d'argent pour les commerçants, des mauvaises expériences d'utilisateurs de la part des clients et des commerçants, une réduction de la confiance aux transactions financières dématérialisées ou numériques, etc.

Bien entendu, la présente invention n'est pas limitée aux exemples et au mode de réalisation décrits et représentés, mais elle est susceptible de nombreuses variantes accessibles à l'homme de l'art.

**Revendications**

**1.** Procédé pour la détection automatique de fraude dans un flux de transactions destinées à un service disponible sur un réseau de télécommunication, comportant un mécanisme d'apprentissage selon lequel des transactions dudit flux de transactions sont mémorisées dans un premier ensemble de transactions ($E_T$), et selon lequel on associe des étiquettes à au moins une partie des transactions dudit premier ensemble, ce mécanisme d'apprentissage comportant en outre

- l'entraînement d'un premier modèle de classification ($M_1$) par transfert de connaissances depuis un second ensemble de transactions ($E_S$), distinct dudit premier ensemble ($E_T$), dans lequel lesdites transactions sont associées à des étiquettes ; lesdites étiquettes indiquant si une transaction respective est une transaction normale ou une fraude ; et
- l'entraînement d'un second modèle de classification ($M_2$) basé sur les transactions et étiquettes du premier et du second ensemble ;

et un mécanisme de prédiction, selon lequel on génère une probabilité Pc d'une transaction (140) parmi ledit flux d'être une fraude ou une transaction normale en combinant au moins une première probabilité $P_1$ générée par ledit premier modèle ($M_1$) et une seconde probabilité $P_2$ générée par ledit second modèle ($M_2$).

**2.** Procédé selon la revendication précédente, dans lequel le premier modèle de classification agrège plusieurs sous-modèles basés sur des technologies différentes.

**3.** Procédé selon l'une des revendications précédentes, dans lequel ledit second modèle de classification est un réseau de neurones multicouche.

**4.** Procédé selon l'une des revendications précédentes, dans lequel ledit second modèle est entraîné sur un ensemble d'apprentissage constitué de transactions dudit premier ensemble augmenté d'attributs encodant une relation entre ledit premier ensemble ($E_T$) et ledit second ensemble ($E_S$).

**5.** Procédé selon l'une des revendications précédentes, dans lequel, dans le mécanisme de prédiction, on génère une probabilité $P_C$ selon $P_C = \alpha.P_1 + (1-\alpha).P_2$, dans laquelle $\alpha$ représente un paramètre entre 0 et 1

**6.** Procédé selon la revendication précédente, dans lequel ledit paramètre $\alpha$ dépend du nombre d'étiquettes associés aux transactions dudit premier ensemble.

**7.** Procédé selon l'une des revendications précédentes, dans lequel lesdites transactions sont des transactions financières et ledit service est un service de paiement.

**8.** Procédé selon l'une des revendications précédentes, dans lequel on annule ou interrompt ladite transaction avec ledit service si la probabilité indique une fraude, en transmettant un message d'annulation audit service.

**9.** Procédé selon l'une des revendications précédentes, dans lequel ladite probabilité Pc est également combinée avec une estimation produite par un système à base de règles.

**10.** Dispositif pour la détection automatique de fraude dans un flux de transactions destinées à un service disponible sur un réseau de télécommunication ; configurer pour mettre en œuvre le procédé selon l'une des revendications précédentes.

Revendications modifiées conformément à la règle 137(2) CBE.

**1.** Procédé pour la détection automatique de fraude dans un flux de transactions destinées à un service disponible sur un réseau de télécommunication, comportant un mécanisme d'apprentissage selon lequel des transactions dudit flux de transactions sont mémorisées dans un premier ensemble de transactions ($E_T$), et selon lequel on associe des étiquettes à au moins une partie des transactions dudit premier ensemble, ce mécanisme d'apprentissage comportant en outre

- l'entraînement d'un premier modèle de classification ($M_1$) par transfert de connaissances depuis un second ensemble de transactions ($E_S$), distinct dudit premier ensemble ($E_T$), dans lequel lesdites transactions sont associées à des étiquettes ; lesdites étiquettes indiquant si une transaction respective est une transaction normale ou une fraude ; et
- l'entraînement d'un second modèle de classification ($M_2$) basé sur les transactions et étiquettes du premier et du second ensemble ;

et un mécanisme de prédiction, selon lequel on génère une probabilité Pc d'une transaction (140) parmi ledit flux d'être une fraude ou une transaction normale en combinant au moins une première probabilité $P_1$ générée par ledit premier modèle ($M_1$) et une seconde probabilité $P_2$ générée par ledit second modèle ($M_2$), et,.
dans lequel on annule ou interrompt ladite transaction avec ledit service si la probabilité indique une fraude, en transmettant un message d'annulation audit service.

**2.** Procédé selon la revendication précédente, dans lequel le premier modèle de classification agrège plusieurs sous-modèles basés sur des technologies différentes.

**3.** Procédé selon l'une des revendications précédentes, dans lequel ledit second modèle de classification est un réseau de neurones multicouche.

**4.** Procédé selon l'une des revendications précédentes, dans lequel ledit second modèle est entraîné sur un ensemble d'apprentissage constitué de transactions dudit premier ensemble augmenté d'attributs encodant une relation entre ledit premier ensemble ($E_T$) et ledit second ensemble ($E_S$).

5.  Procédé selon l'une des revendications précédentes, dans lequel, dans le mécanisme de prédiction, on génère une probabilité $P_C$ selon $P_C = \alpha.P_1 + (1-\alpha).P_2$, dans laquelle $\alpha$ représente un paramètre entre 0 et 1

6.  Procédé selon la revendication précédente, dans lequel ledit paramètre $\alpha$ dépend du nombre d'étiquettes associés aux transactions dudit premier ensemble.

7.  Procédé selon l'une des revendications précédentes, dans lequel lesdites transactions sont des transactions financières et ledit service est un service de paiement.

8.  Procédé selon l'une des revendications précédentes, dans lequel ladite probabilité $P_C$ est également combinée avec une estimation produite par un système à base de règles.

9.  Dispositif pour la détection automatique de fraude dans un flux de transactions destinées à un service disponible sur un réseau de télécommunication ; configurer pour mettre en œuvre le procédé selon l'une des revendications précédentes.

Fig. 1

EP 3 889 871 A1

**Fig. 2a**

**Fig. 2b**

Fig. 3

Fig. 4

Fig. 5

Europäisches
Patentamt

European
Patent Office

Office européen
des brevets

# RAPPORT DE RECHERCHE EUROPEENNE

Numéro de la demande

EP 20 31 5097

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2011/282778 A1 (WRIGHT WILLIAM A [US] ET AL) 17 novembre 2011 (2011-11-17)<br>* alinéa [0002] *<br>* alinéa [0034] *<br>* alinéa [0058] *<br>* alinéa [0064] - alinéa [0079] *<br>* alinéa [0176] *<br>* alinéa [0261] *<br>-----  | 1-10 | INV.<br>G06Q20/40<br>G06N3/02 |
| X | US 2002/133721 A1 (ADJAOUTE AKLI [FR]) 19 septembre 2002 (2002-09-19)<br>* alinéa [0035] - alinéa [0036] *<br>* alinéa [0092] *<br>* alinéa [0105] - alinéa [0115] *<br>-----  | 1-10 | |
| X | CN 108 629 593 A (CHINA MERCHANTS BANK CO LTD) 9 octobre 2018 (2018-10-09)<br>* alinéa [0002] *<br>* alinéa [0008] - alinéa [0014] *<br>* alinéa [0061] - alinéa [0075] *<br>-----  | 1-10 | |

DOMAINES TECHNIQUES RECHERCHES (IPC)

G06Q
G06N

Le présent rapport a été établi pour toutes les revendications

| Lieu de la recherche | Date d'achèvement de la recherche | Examinateur |
|---|---|---|
| La Haye | 31 août 2020 | Coquil, David |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

                  

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 20 31 5097

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-08-2020

| Document brevet cité au rapport de recherche | Date de publication | Membre(s) de la famille de brevet(s) | Date de publication |
|---|---|---|---|
| US 2011282778 A1 | 17-11-2011 | AU 2002311941 A1 | 09-12-2002 |
| | | CA 2447512 A1 | 05-12-2002 |
| | | EP 1390833 A2 | 25-02-2004 |
| | | JP 2004537781 A | 16-12-2004 |
| | | US 2002194119 A1 | 19-12-2002 |
| | | US 2011047044 A1 | 24-02-2011 |
| | | US 2011282778 A1 | 17-11-2011 |
| | | WO 02097563 A2 | 05-12-2002 |
| US 2002133721 A1 | 19-09-2002 | AU 2001265308 A1 | 03-10-2002 |
| | | US 7721336 B1 | 18-05-2010 |
| | | US 2002133721 A1 | 19-09-2002 |
| | | WO 02075476 A2 | 26-09-2002 |
| CN 108629593 A | 09-10-2018 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **S. J. PAN ; Q. YANG.** A Survey on Transfer Learning. *IEEE Transactions on Knowledge and Data Engineering,* Octobre 2010, vol. 22, 1345-1359
- **YING LU.** Transfer Learning for Image Classification. Université de Lyon, 2017
- **R, PYTHON ; JULIA.** *Gradient boosting*
- **HARRY ZHANG.** The Optimality of Naive Bayes. *Conférence FLAIRS2004*
- Efficient backprop. **LECUN, YANN A. et al.** Neural networks: Tricks of the trade. Springer, 2012, 9-48
- **DIEDERIK P. KINGMA ; JIMMY LEI BA.** *Adam : A method for stochastic optimization,* 2014
- **TIJMEN TIELEMAN ; GEOFFREY HINTON.** Lecture 6.5-rmsprop: Divide the gradient by a running average of its recent magnitude. *COURSERA: neural networks for machine learning,* 2012, vol. 4 (2), 26-31
- **GANIN Y. ; USTINOVA E. ; AJAKAN H. ; GERMAIN P. ; LAROCHELLE H. ; LAVIOLETTE F. ; MARCHAND M. ; LEMPITSKY V.** Domain-adversarial training of neural networks. *Journal of Machine Learning Resources,* 2016, vol. 17 (1), 2096-2030